# EUROPEAN PATENT APPLICATION

(11) **EP 2 578 817 A2**
(43) Date of publication of application: **10.04.2013**
(21) Application number: 12185441.8
(22) Date of filing: 21.09.2012
(51) Int. Cl.: F01K 25/08, F01B 23/10, F01C 13/04

(54) **Power generation apparatus**

(30) Priority: 03.10.2011 JP 2011219227
(71) Applicant: Kabushiki Kaisha Kobe Seiko Sho (Kobe Steel, Ltd.), Kobe-shi, Hyogo 651-8585 (JP)
(72) Inventor: Adachi, Shigeto, Takasago-shi,, Hyogo 676-8670 (JP); Matsumara, Masayoshi, Takasago-shi,, Hyogo 676-8670 (JP); Narukawa, Yutaka, Takasago-shi,, Hyogo 676-8670 (JP); Takahashi, Kazuo, Takasago-shi,, Hyogo 676-8670 (JP)
(74) Representative: TBK

(57) **Abstract**

A power generation apparatus (1) includes an expander (3) and a power transmission shaft (6) that extracts a rotational driving force generated by the expander to the exterior of a housing (5) of the expander. The housing of the expander contains a driving unit of the expander within a space enclosed by a partition wall of the housing. The power transmission shaft includes a magnetic coupling, for transmitting the rotational driving force from the expander to the exterior of the housing, that is divided between the interior and exterior of the housing of the expander through the partition wall. The rotational driving force extracted via the magnetic coupling is used as auxiliary power that supplements the power of a driving source provided separately from the expander when driving a rotating machine using the power of the driving source. A clutch mechanism (18) and a speed variator (17) are provided in a power transmission path that transmits the rotational driving force extracted by the power transmission shaft to the driving source.

## Description

### BACKGROUND OF THE INVENTION

### (FIELD OF THE INVENTION)

The present invention relates to power generation apparatuses that extract power generated by a thermal engine to the exterior of the thermal engine and use that power as auxiliary power that supplements the power of a driving source provided separately from the thermal engine.

### (DESCRIPTION OF THE RELATED ART)

Among thermal engines, external combustion engines are configured to convert heat into power (that is, convert heat energy into kinetic energy) by expanding and condensing a working medium (also called a working fluid), such as water or a low-boiling point medium (that is, a medium having a lower boiling point than water) such as ammonia, pentane, Freon, alternative Freon, or the like, through a thermodynamic cycle such as a Rankine cycle. Such a thermal engine includes an expander that expands working medium vapor, and the expander is contained within a housing that is separated from the exterior in an airtight state. Rotational driving force obtained through this expander is extracted to the exterior of the housing in which the expander is contained via a shaft, and is used to rotate a rotating machine such as a compressor, a blower, a pump, an electricity generator, or the like.

For example, JP-2009-185772A discloses a fluid machine, including an expanding mechanism that generates rotational force by expanding a working fluid, an electricity generator driven by the rotational force of the expanding mechanism, and a pump mechanism driven by the rotational force of the expanding mechanism; the fluid machine is configured so that the volume of the pump mechanism is variable.

Meanwhile, JP-2005-30386A discloses a fluid machine including an expander that converts heat energy from a Rankine cycle into rotational power, a liquid supply pump that is driven by the rotational power and increases the pressure in the Rankine cycle, and a motor that generates rotational driving force; a rotating shaft is shared by these elements.

These apparatuses (fluid machines) both contain an expander, which is part of a thermal engine, and a rotating machine such as an electricity generator or a pump together within a single housing.

Incidentally, with the apparatuses (fluid machines) disclosed in the aforementioned background art, it is absolutely necessary to provide a seal in the housing that contains the expander in order to prevent the working medium from leaking.

In the case where the expander and a rotating machine such as an electricity generator or a pump are contained within a single housing, as disclosed in JP-2009-185772A and the example in Fig. 1 of JP-2005-30386A, there are situations where a shaft seal for a shaft that connects the expander and the rotating machine is not needed. However, specialized components are required for the housing or the rotating machine, which poses a problem in that generic components cannot be used. This can also easily lead to an increase in the initial costs of the power generation apparatus, or electricity generation equipment that uses the power generation apparatus.

On the other hand, in the case where a rotational shaft for transmitting power passes through the housing and protrudes to the exterior, as shown in Figs. 19, 20, and so on of JP-2005-30386A, a seal for the shaft is extremely important particularly in binary electricity generation, in which a low-boiling point medium, which should not be exposed to the atmosphere, is used as the working medium. With this equipment, a structure is employed in which a shaft seal is provided between a rotary machine (a motor 9) and an expander, and thus the working medium does not leak toward the rotary machine. However, it is difficult to prevent the working medium from leaking with certainty even if this type of shaft seal is employed, and it is also necessary to carry out complicated maintenance procedures on the shaft seal. Further, this can easily lead to an increase in the running costs of the power generation apparatus, or electricity generation equipment that uses the power generation apparatus.

Having been achieved in light of the stated problems, it is an object of the present invention to provide a power generation apparatus capable of efficiently transmitting rotational driving force generated by an expander to the exterior of a housing that contains the expander while preventing a working medium from leaking, even without the thermal engine and a rotary machine being contained together within a single housing, or without a shaft sealing mechanism being employed on a shaft that transmits power, and that transmits the rotational driving force to a rotating machine driven by power from a driving source provided separately from the thermal engine and uses the rotational driving force as auxiliary power for supplementing the power from the driving source.

### SUMMARY OF THE INVENTION

In order to achieve the above object, a power generation apparatus according to the present invention includes the following technical means.

That is, a power generation apparatus according to the present invention includes: an expander; a housing that houses the expander, the housing containing a driving unit of the expander within a space enclosed by a partition wall of the housing; a power transmission shaft that extracts rotational driving force generated by the expander to the exterior of the housing, the power transmission shaft including a magnetic coupling, for transmitting the rotational driving force from the expander to the exterior of the housing, that is divided between the interior and exterior of the housing of the expander through the partition wall; a driving source provided separately from the expander, the rotational driving force extracted by the power transmission shaft being used as auxiliary power for supplementing the power of the driving source when driving a rotating machine using the power of the driving source; a clutch mechanism, provided in the power transmission path that transmits the rotational driving force extracted by the power transmission shaft to the driving source, that controls a transmission state of the rotational driving force; and a speed variator, provided in the power transmission path, that changes and transmits a rotational speed of the power transmission shaft.

In the above power generation apparatus, an electricity generator that generates electricity using the rotational driving force may be provided in the power transmission path.

In the above power generation apparatus, an electricity generator that generates electricity using the rotational driving force extracted via the driving unit of the expander and transmits power generated by the expander to the power transmission shaft may be provided within the housing.

In addition, a power generation apparatus according to the present invention drives a compressor that compresses a gas to a high pressure, and includes: a thermal engine, the thermal engine including an evaporator that evaporates a liquid working medium using heat supplied from a heat source, an expander that produces rotational driving force by expanding the working fluid evaporated by the evaporator, a condenser that converts the working fluid expanded by the expander into a liquid working medium by condensing the working fluid, and a medium circulation pump that pressure-transfers the liquid working medium to the evaporator; a housing that houses the expander, the housing containing a driving unit of the expander within a space enclosed by a partition wall of the housing; a power transmission shaft that extracts rotational driving force generated by the expander to the exterior of the housing, the power transmission shaft including a magnetic coupling, for transmitting the rotational driving force from the expander to the exterior of the housing, that is divided between the interior and exterior of the housing of the expander through the partition wall; and a driving source provided separately from the expander, the rotational driving force extracted by the power transmission shaft being used as auxiliary power for supplementing the power of the driving source when driving the compressor using the power of the driving source, in which heat of the gas that has been adiabatically compressed by the compressor is supplied to the evaporator as the heat source for evaporating the liquid working medium.

The power generation apparatus may drive a multi-stage compressor that includes two or more compressors, and the high-pressure gas discharged from each compressor in the multi-stage compressor may be supplied to the evaporator as the heat source for evaporating the working medium within the thermal engine.

According to the power generation apparatus of the present invention, the rotational driving force generated by the expander can be efficiently transmitted to the exterior of the housing that contains the expander while preventing a working medium from leaking, even without employing a shaft seal mechanism on the shaft that transmits the power; in addition, the rotational driving force can be transmitted to the rotating machine that is driven by the power of the driving source provided separately from the expander and used as auxiliary power for supplementing the power of the driving source. It is also unnecessary to provide the expander and the driving source together within a single housing. Furthermore, because the clutch mechanism and the speed variator are provided, the rotational driving force generated by the expander can be applied to the driving source as auxiliary power at an appropriate rotational frequency when it is necessary to add the auxiliary power.

### BRIEF DESCRIPTION OF THE DRAWINGS

Fig. 1 is a diagram illustrating a power generation apparatus according to a first embodiment.
Fig. 2 is a diagram illustrating a power generation apparatus according to a second embodiment.
Fig. 3 is a diagram illustrating a power generation apparatus according to a third embodiment.
Fig. 4 is a diagram illustrating a power generation apparatus according to a fourth embodiment.
Fig. 5 is a diagram illustrating a power generation apparatus according to a fifth embodiment.
Fig. 6 is a diagram illustrating a power generation apparatus according to a sixth embodiment.
Fig. 7 is a diagram illustrating a power generation apparatus according to a seventh embodiment.
Figs. 8A and 8B are diagrams illustrating the transmission of power from an expander to a motor.

### DESCRIPTION OF THE PREFERRED EMBODIMENTS

### (First Embodiment)

Hereinafter, a first embodiment of a power generation apparatus 1 according to the present invention will be described based on the drawings.

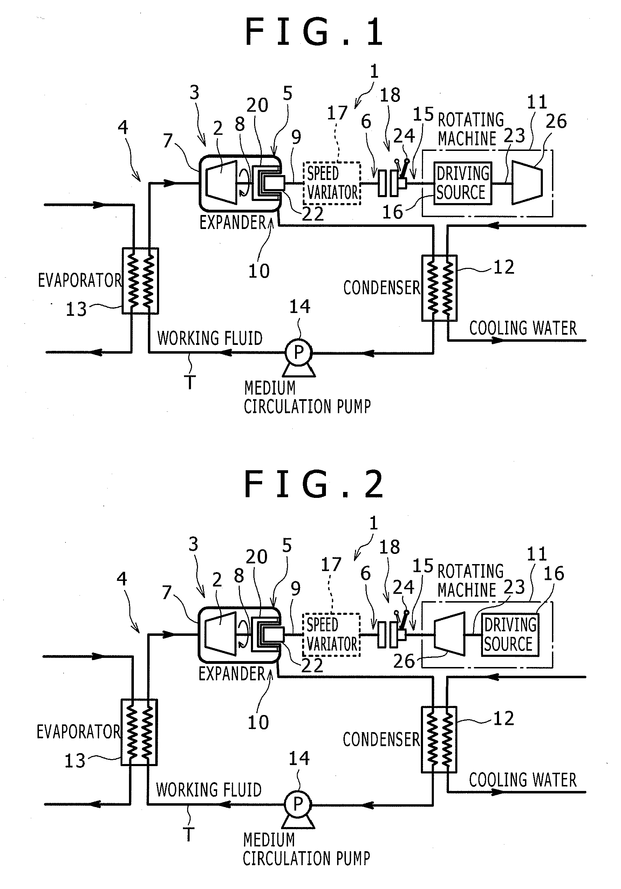

As shown in Fig. 1, the power generation apparatus 1 according to the first embodiment includes: a thermal engine 4 provided with an expander 3 that has a driving unit 2 (a screw rotor 2, in the present embodiment) rotationally driven by expanding the vapor of a working fluid T; and a power transmission shaft 6 that extracts rotational driving force generated by the expander 3 to the exterior of a housing 5 that contains the expander 3. The housing 5 contains the driving unit 2 of the expander 3 within a space enclosed by a partition wall 7 of the housing 5. The power transmission shaft 6 is divided by the partition wall 7 into a drive shaft 8 located within the housing 5 and a slave shaft 9 located outside of the housing 5. A magnetic coupling 10 is provided in the divided power transmission shaft 6, or in other words, in the drive shaft 8 and the slave shaft 9, in order to transmit the rotational driving force of the expander 3 to the exterior of the housing 5. In this manner, the power generation apparatus 1 is configured of the drive shaft 8 and the slave shaft 9, which make up the power transmission shaft 6, and the magnetic coupling 10; the rotational driving force is transmitted to the exterior of the housing 5 by the power transmission shaft 6. The configuration is such that the rotational driving force transmitted to the exterior is transmitted to a rotating machine 11 provided separately from the thermal engine 4, and the rotational driving force is used as auxiliary power for the rotating machine 11.

Note that in the first embodiment, a binary cycle is illustrated as an example of the thermal engine 4. That said, any engine may be included as the thermal engine 4 as long as it is an engine that converts heat into power. Steam engines, steam turbines, external combustion engines using a Stirling cycle, or internal combustion engines such as gas turbines are also included in addition to engines that use a Rankine cycle such as a binary cycle.

As shown in Fig. 1, the binary cycle includes, in a cyclic channel connected as a closed loop: an evaporator 13 that evaporates the liquid working fluid T; the expander 3 that rotationally drives the driving unit 2 (for example, the screw rotor 2, which will be described later) by expanding the vapor of the working fluid T evaporated by the evaporator 13; a condenser 12 that condenses the vapor of the working fluid T expanded by the expander 3 and converts the working fluid T into liquid; and a medium circulation pump 14 that circulates the working fluid T by pressure-transferring the liquid working fluid T condensed by the condenser 12 to the evaporator 13.

The expander 3 includes the screw rotor 2 (driving unit 2) that is rotationally driven by a pressure difference between the pre- and post-expansion vapor. The screw rotor 2 is capable of freely rotating central to the drive shaft 8, and can transmit the generated rotational driving force via the drive shaft 8 to the magnetic coupling 10 connected to the drive shaft 8.

The housing 5 (partition wall 7) is provided around the screw rotor (driving unit) 2 of the expander 3, and the interior and exterior can be partitioned in an airtight state by the housing 5. The working fluid T, which is a low-boiling point medium used in the binary cycle, is contained along with the screw rotor 2 within the housing 5 that is partitioned in an airtight state in this manner.

In the case where the rotational driving force produced by the aforementioned screw rotor of the expander is to be transmitted to a rotating machine driven by the power of a driving source provided separately from the thermal engine in which the expander is provided (that is, the aforementioned binary cycle or the like) and used as auxiliary power for driving the rotating machine, it is normally necessary to provide a power transmission means between the expander and the rotating machine that can transmit the rotational driving force generated by the expander to the rotating machine.

Conventionally, in the case where a rotational shaft provided so as to pass through the interior and exterior of the expander housing is employed as the power transmission means, it is absolutely necessary to provide a shaft seal that suppresses the working fluid from leaking from between the rotational shaft and the housing. Providing such a shaft seal is undesirable because it complicates the maintenance of the apparatus, leads to an increase in the running cost, and carries the risk of leaking of the working fluid that is contained. In order to solve this problem, the working fluid has conventionally been prevented from leaking by containing the expander and the rotating machine together within a single housing. Although there are cases where containing the expander and the rotating machine together within a single housing in this manner makes it unnecessary to provide a shaft seal between the two, doing so also severely limits the range of items that can be applied as the rotating machine, which is undesirable as it leads to an increase in initial costs and makes it impossible to use generic components.

Accordingly, the power generation apparatus 1 according to the present invention includes the magnetic coupling 10 that transmits the rotational driving force of the expander 3 to the exterior of the housing 5 through the partition wall 7. In other words, to enable rotational driving force to be transmitted between the expander 3 and the rotating machine 11, the power generation apparatus 1 includes a power transmission path 15 that has the power transmission shaft 6, which is separated into the drive shaft 8 and the slave shaft 9 with the partition wall 7 therebetween, and the magnetic coupling 10, which magnetically couples the two shafts that are separated between the interior and exterior of the housing 5 with the partition wall 7 therebetween. The rotational driving force extracted via the magnetic coupling 10 is transmitted to the rotating machine 11 driven by the power of a driving source 16 provided separately from the aforementioned thermal engine 4 (binary cycle), and is used as auxiliary power for driving the rotating machine 11.

Meanwhile, a speed variator 17 that changes the rotational speed of the power transmission shaft 6 and transmits the auxiliary power downstream, and a clutch mechanism 18 that controls the state of transmission of the auxiliary power to the rotating machine 11, are provided in the power transmission path 15, through which the rotational driving force extracted via the magnetic coupling 10 is transmitted.

Next, descriptions will be given of the magnetic coupling 10, power transmission shaft 6, speed variator 17, and clutch mechanism 18 of which the power generation apparatus 1 is configured, and of the rotating machine 11 that uses the auxiliary power generated by the expander 3.

As shown in Fig. 1, the drive shaft 8, which is one part of the power transmission shaft 6, is a rotational shaft disposed following the center of the rotational axis of the screw rotor 2 in the expander 3. One end of the drive shaft 8 (the left side in Fig. 1) is coupled with the screw rotor 2, which serves as the driving unit 2 of the expander 3, and the other end (the right side in Fig. 2) extends to the vicinity of the partition wall 7; an outer cylinder 20 of the magnetic coupling 10, in which driving-side magnets are mounted, is provided on the leading end of this other side.

Meanwhile, the slave shaft 9, which is a part of the power transmission shaft 6, is a rotatable shaft disposed following the direction that is coaxial with the drive shaft 8. One end of the slave shaft 9 (the left side in Fig. 1) extends toward the expander 3, and an insertion member 22 to which slave-side magnets are attached is provided on this one end; the other end (the right side in Fig. 1) is connected to the rotating machine 11, which will be mentioned later.

The magnetic coupling 10 is configured of the outer cylinder 20 provided on the drive shaft 8 and the insertion member 22 provided on the slave shaft 9. The outer cylinder 20 is a closed-end cylindrical member that is open on the side that faces the rotating machine 11 (the side opposite to the screw rotor 2), and is formed of a nonmagnetic material. The drive shaft 8 is coupled coaxially with the outer cylinder 20, and the two driving-side magnets, which are disposed separated from each other in the circumferential direction, are provided opposite to each other in areas of the outer cylinder 20 formed in the cylindrical shape.

The insertion member 22 is a circular column-shaped member, and is, like the outer cylinder 20, formed of a nonmagnetic material. The insertion member 22 can be inserted into the outer cylinder 20 with a gap therebetween, and the slave-side magnets, which are of a number based on the driving-side magnets, are attached on the outer circumferential surface of the insertion member 22 (the outer circumferential surface of the portion that is inserted into the outer cylinder 20).

The driving-side magnets and the slave-side magnets are disposed so that opposite poles are facing one another, so that magnetic pull is induced between the magnets through the partition wall 7; thus the rotational driving force of the drive shaft 8 can be transmitted to the slave shaft 9.

Although the driving-side magnets and the slave-side magnets are, in this example, permanent magnets such as neodymium magnets or samarium-cobalt magnets, it should be noted that electro-magnets may also be used.

The rotational driving force extracted to the exterior of the housing 5 via the magnetic coupling 10 is transmitted to the aforementioned slave shaft 9, and the rotational driving force can be transmitted to the speed variator 17 via the slave shaft 9. The speed variator 17 is an element that changes the rotational speed on an input side (the slave shaft 9) to the optimal rotational speed for the rotating machine 11 and transmits the rotational driving force to an output side (the slave shaft 9). In addition, a rotational shaft of the rotating machine 11 (a pump drive shaft 23, which will be mentioned later) is connected to the slave shaft 9. The rotational driving force whose speed has been changed by the speed variator 17 in this manner is transmitted downstream as auxiliary power for the rotating machine 11. A component that uses gears, belts, or the like can be used as the speed variator 17. Furthermore, a component that decreases, increases, or maintains the rotational frequency between the input-side shaft and the output-side shaft can be used as the speed variator 17.

The clutch mechanism 18 is a component that controls the state of the transmission of the auxiliary power to the rotating machine 11; the clutch mechanism 18 is provided on the output side (the slave shaft 9) of the speed variator 17 in the power transmission path 15, and can interrupt/resume the transmission of the rotational driving force to the rotating machine 11. The clutch mechanism 18 includes a pair of clutch plates (not shown) disposed so as to face each other and an operation lever 24 operated so as to engage/disengage the pair of clutch plates. By using the operation lever 24 to bring the surfaces of the clutch plates into contact with each other or separate from each other, the transmission of the rotational driving force to the rotating machine 11 can be interrupted. Note that a friction clutch, which produces a given state of slippage when controlling the state of transmission, can be favorably used for the clutch mechanism 18; furthermore, instead of lever operation, the clutch mechanism 18 may be magnetically operated, or hydraulically operated.

The rotating machine 11 is driven by the power of the driving source 16 that is provided separately from the aforementioned thermal engine 4 (binary cycle); examples include a fluid machine such as a pump or a compressor that is operated when a member within the apparatus is rotated by the power of the driving source 16, or a member that is rotated using the rotational driving force of an engine (the driving source 16) in a machine that uses the engine (driving source 16), such as an automobile or a marine vessel. Furthermore, an electricity generator 25 that generates electricity using, for example, a gasoline engine and a diesel engine as a driving source 16 may be used in such a rotating machine 11. Further, an electric motor may be used as a driving source 16 of the rotating machine 11, rather than a gasoline engine, a diesel engine, or the like that employs internal combustion.

Incidentally, the power generation apparatus 1 according to the present invention can be embodied in a variety of ways as illustrated in the first through sixth embodiments, depending on how the power transmission path 15 spanning from the expander 3 of the thermal engine 4 to the rotor of the rotating machine 11 is arranged, and depending on whether or not the electricity generator 25 is provided.

As shown in Fig. 1, the power generation apparatus 1 according to the first embodiment includes the power transmission path 15, which transmits the rotational driving force extracted to the exterior of the housing 5 via the magnetic coupling 10 to the rotating machine 11 via the slave shaft 9 of the power transmission shaft 6. The configuration is such that the speed variator 17, clutch mechanism 18, and driving source 16 are arranged in the power transmission path 15 in that order from the magnetic coupling 10, and the rotational driving force is ultimately outputted to a pump rotor 26 through the driving source 16. In other words, the power generation apparatus according to the first embodiment is an example of an apparatus in which an electric motor, or in other words, the driving source 16, is present in the power transmission path 15 that spans from the expander 3 to the pump rotor 26, and in which the electricity generator 25 is not provided.

With the aforementioned power generation apparatus 1, the rotational driving force extracted to the exterior of the housing 5 via the magnetic coupling 10 is first transmitted to the speed variator 17 via the slave shaft 9 that is connected to the magnetic coupling 10. After the rotational speed has been changed by the speed variator 17 to the optimal speed for driving the rotating machine 11, the post-change rotational driving force is transmitted (inputted) to the driving source 16 of the rotating machine 11 via the clutch. The rotating machine 11 according to the present embodiment transmits the power of the driving source 16 to the pump rotor 26 via the pump drive shaft 23, and a pump that operates (sucks, or exhausts) is implemented by rotationally driving the pump rotor 26.

As described above, the rotational driving force whose speed has been changed by the speed variator 17 is directly inputted to the pump drive shaft 23 in tandem with the rotational driving force of the driving source 16 itself, and power resulting from combining the rotational driving force extracted to the exterior of the housing 5 via the magnetic coupling 10 and the power generated by the driving source 16 is transmitted to the pump drive shaft 23; as a result, the pump is driven by a combination of the two rotational driving forces from the different generation sources.

To rephrase, the power generation apparatus 1 according to the first embodiment is an example of an apparatus that uses the rotational driving force extracted to the exterior of the housing 5 via the magnetic coupling 10 as auxiliary power when driving a pump using the power from an electric motor. Using such a power generation apparatus 1 makes it possible to use the rotational driving force extracted to the exterior of the housing 5 via the magnetic coupling 10 as auxiliary power, which has the effect of reducing the power consumed by the electric motor, which is a driving source 16. Meanwhile, in the case where a gasoline engine is used as the driving source 16 instead of an electric motor, there is an effect of improving the fuel efficiency.

### (Second Embodiment)

Although the magnetic coupling 10, speed variator 17, clutch mechanism 18, driving source 16, and pump rotor 26 are arranged in the power transmission path 15 in that order in the aforementioned first embodiment, it is also possible to reverse the arrangement of the driving source 16 and the pump rotor 26 in the power transmission path 15.

In other words, as shown in Fig. 2, the power generation apparatus 1 according to a second embodiment is an example of an apparatus in which the speed variator 17 and the driving source 16, which is an electric motor, are separately connected to the respective ends of the pump drive shaft 23 of the pump rotor 26, and in which the electricity generator 25 is not provided.

Even if such a power generation apparatus 1 is employed, the rotational driving force extracted to the exterior of the housing 5 via the magnetic coupling 10 can be used as auxiliary power, which has the effect of reducing the amount of power consumed by the driving source 16, improving the fuel efficiency thereof, or the like.

### (Third Embodiment, Fourth Embodiment)

Although the aforementioned first and second embodiments describe examples of the power generation apparatus 1 that is not provided with the electricity generator 25, the following third through sixth embodiments describe examples of the power generation apparatus 1 that is provided with the electricity generator 25.

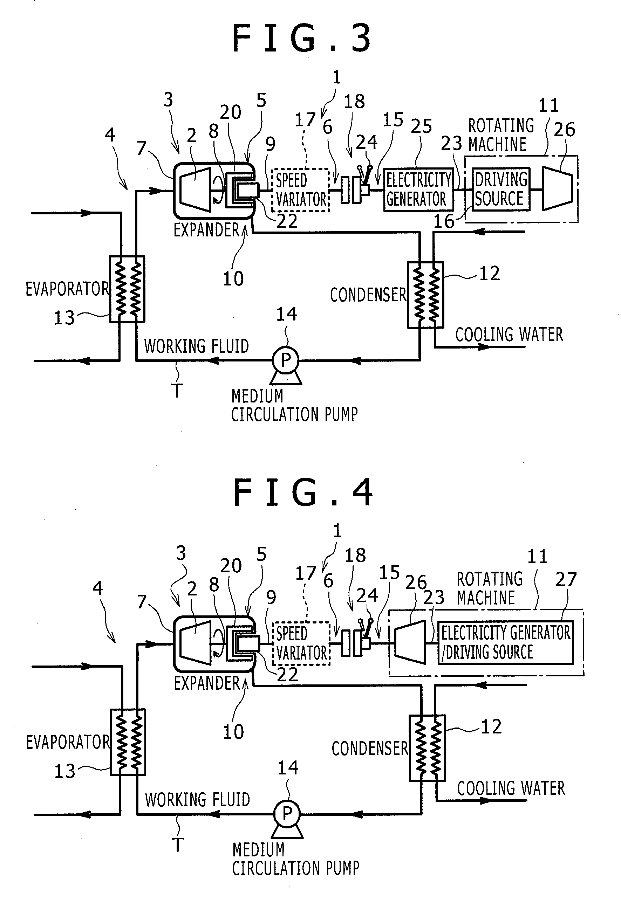

In other words, as shown in Fig. 3, the power generation apparatus 1 according to the third embodiment includes the electricity generator 25 in the power transmission path 15, in a location that is closer to the rotating machine 11 than the speed variator 17. Electricity is first generated by rotating the electricity generator 25 using the rotational driving force extracted to the exterior of the housing 5 via the magnetic coupling 10, and the rotational driving force that remains after the electricity generation is transmitted to the rotating machine 11; this remaining rotational driving force is used as auxiliary power for supplementing the power of the driving source 16.

Using such a power generation apparatus 1 makes it possible, in an electricity generation cycle that generates electricity using a binary cycle (the thermal engine 4), to use the rotational driving force that was not used in the generation of electricity by the electricity generation cycle as auxiliary power for supplementing the power of the driving source 16 in the rotating machine 11, which has the effects of reducing the amount of power consumed by the driving source 16, improving the fuel efficiency thereof, or the like.

Meanwhile, if the arrangement of the driving source 16 and the pump rotor 26 in the power transmission path 15 according to the third embodiment shown in Fig. 3 is reversed, the power generation apparatus 1 according to the fourth embodiment, shown in Fig. 4, is obtained.

It should be noted that in the power generation apparatus 1 according to the fourth embodiment, a motor 27 having an electricity generation function is used both as an electric motor, which is the driving source 16 of the rotating machine 11, and as the electricity generator 25. This motor 27 having an electricity generation function operates as an electric motor when there is insufficient power for rotationally driving the pump rotor 26, and operates as the electricity generator 25 when there is power left over.

Using such a power generation apparatus 1 makes it possible, in an electricity generation cycle that generates electricity using a binary cycle (the thermal engine 4), to use the rotational driving force that was not used in the generation of electricity by the electricity generation cycle as auxiliary power for supplementing the power of the driving source 16 in the rotating machine 11, which has the effects of reducing the amount of power consumed by the driving source 16, improving the fuel efficiency thereof, or the like.

### (Fifth Embodiment, Sixth Embodiment)

Although the electricity generator 25 is provided outside the housing 5 of the expander 3 in the aforementioned third and fourth embodiments, it should be noted that the electricity generator 25 can be provided within the housing 5 of the expander 3, as illustrated in the following fifth and sixth embodiments.

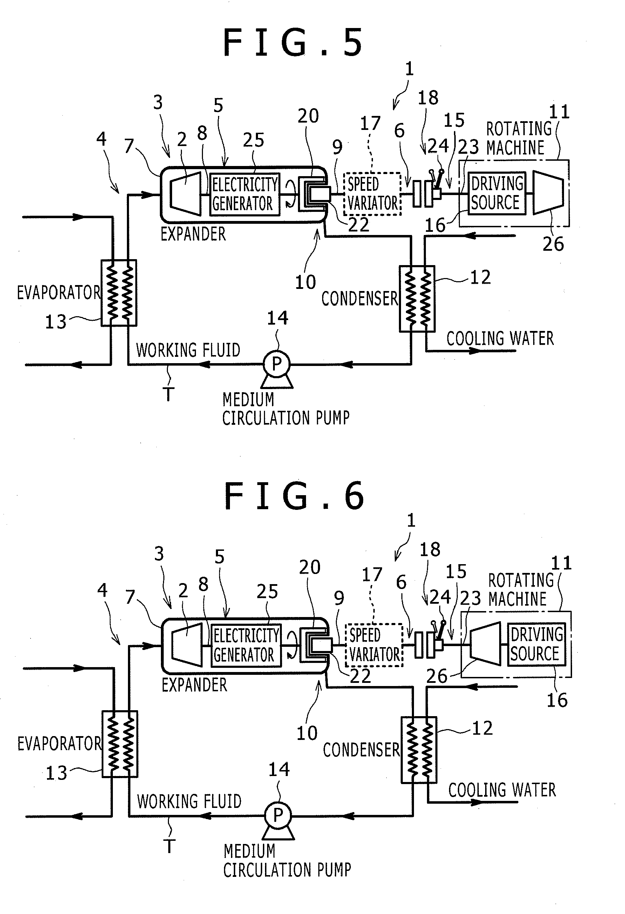

For example, as shown in Figs. 5 and 6, the electricity generator 25 is provided in the power transmission path 15 (that is, in the drive shaft 8) between the driving unit 2 (screw rotor 2) of the expander 3 and the outer cylinder 20 of the magnetic coupling 10, and electricity is generated thereby; the rotational driving force not used to generate electricity can also be extracted to the exterior of the housing 5 and used as auxiliary power for driving the rotating machine 11.

Using such a power generation apparatus 1 makes it possible to use the rotational driving force that was not used in the generation of electricity by the electricity generation cycle as auxiliary power for supplementing the power of the driving source 16 in the rotating machine 11, which has the effects of reducing the amount of power consumed by the driving source 16, improving the fuel efficiency thereof, or the like.

### (Seventh Embodiment)

The rotating machine 11, which is the target of the driving carried out by the power generation apparatus 1 according to the present invention, often produces a large amount of heat during rotational operations.

For example, in the case where the rotating machine 11 is a gas compressor 50 that compresses a gas V such as air to a high pressure, a high-pressure gas V that has a high temperature and an extremely high amount of heat is produced through adiabatic compression. At this time, the high-pressure gas V that is produced is cooled, by a cooling device such as a cooler 54, to a required temperature based on the purpose of use. In other words, the amount of heat produced by the gas compressor 50, or the rotating machine 11, has typically been released as waste heat.

Accordingly, in the present invention, heat produced by the rotating machine 11 is introduced to the power generation apparatus 1, thus reusing useful heat.

A seventh embodiment of the power generation apparatus 1 according to the present invention (that is, reusing heat from the rotating machine 11) will be described based on the drawings.

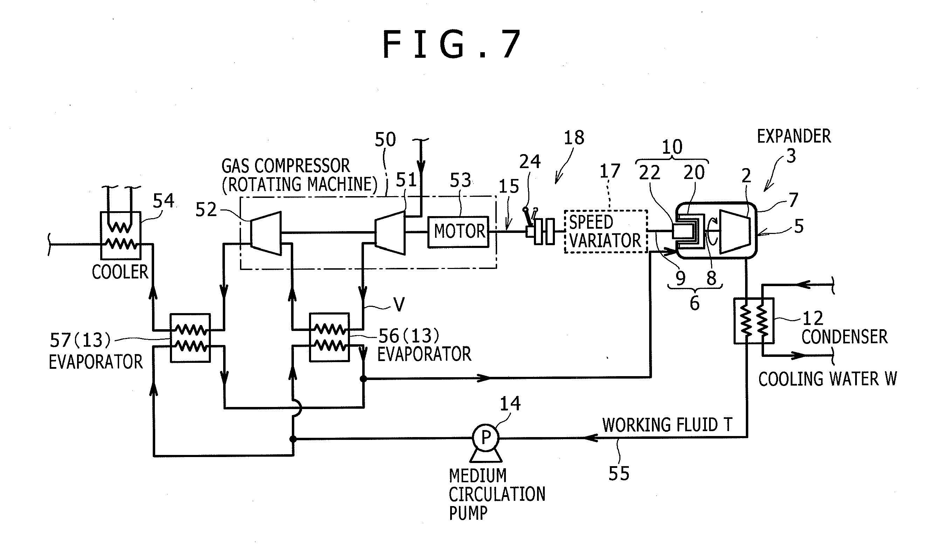

As shown in Fig. 7, the configuration of the power generation apparatus 1 according to the seventh embodiment is essentially the same as the apparatus according to the first embodiment (see Fig. 1) in the following points.

That is, the power generation apparatus 1 according to the seventh embodiment, or to rephrase, the thermal engine 4 according to the seventh embodiment, uses a mechanism that employs a binary cycle.

To be more specific, the thermal engine 4 includes: the evaporator 13 that evaporates the liquid working fluid T (working medium) using heat supplied from a heat source; the expander 3 that rotationally drives the driving unit 2 by expanding the vapor of the working fluid T evaporated by the evaporator 13; the condenser 12 that converts the vapor of the working fluid T expanded by the expander 3 into liquid working fluid T by condensing that vapor; and the medium circulation pump 14 that circulates the liquid working fluid T condensed by the condenser 12 by pressure-transferring the working fluid T to the evaporator 13.

The evaporator 13, the expander 3, the condenser 12, and the medium circulation pump 14 are connected in that order by a closed-loop circulation pipe 55 that circulates the working fluid T (a low-boiling point organic medium, such as alternative Freon (R245fa) or the like).

Furthermore, the driving unit 2 (a screw rotor) that configures the expander 3 is housed within the thermal engine 4 in a sealed state, and the power transmission shaft 6, which extracts the rotational driving force produced by the driving unit 2 rotating to the exterior of the thermal engine 4, is provided with the magnetic coupling 10. These configurations are essentially the same as in the first embodiment. The configuration in which rotational driving force produced by the expander 3 is transmitted to the exterior of the thermal engine 4 via the magnetic coupling 10, and is sent to the rotating machine 11 and used as auxiliary power for the rotating machine 11, is also the same.

In addition, providing the speed variator 17 that changes the rotational speed of the power transmission shaft 6 and transmits the auxiliary power downstream, and the clutch mechanism 18 that controls the transmission state of the power to the rotating machine 11, between the expander 3 and the rotating machine 11, is also the same in the seventh embodiment.

However, the configuration of the power generation apparatus 1 according to the seventh embodiment differs greatly from the first embodiment in the following points.

First, a "gas compressor", which pressurizes a supplied gas V to a high pressure, is employed as the rotating machine 11 that is the target of the power generation apparatus 1.

The gas compressor 50 introduces a gas V (at, for example, approximately 30°C) from the exterior and adiabatically compresses the introduced gas V by rotating compression means (rotors) 51 and 52 within the gas compressor 50, thus producing a high-pressure gas V. At this time, the produced gas V rises in temperature (to, for example, approximately 180°C), and thus has a high amount of heat.

The gas compressor 50 according to the seventh embodiment includes multiple compression means (a first-stage compression means 51 and a second-stage compression means 52) in an axially serially connected state and a motor 53 that drives the multiple compression means, and is an oil-free multi-stage gas compressor that does not use a lubrication oil. The motor 53 that produces the driving force is an electric motor. However, a hydraulic motor that drives using a hydraulic pump may be used as the motor 53.

With this gas compressor 50, the gas V introduced from the exterior is compressed by the first-stage compression means, resulting in a high-pressure gas V; this gas V first flows into a primary side of a first evaporator 56 (details will be given later) provided in an auxiliary power transmission apparatus 1. The gas V that has flowed through the first evaporator 56 is then transferred to the second-stage compression means and is compressed further, resulting in a high-pressure gas V. The high-pressure gas V that is produced flows into a primary side of a second evaporator 57 (details will be given later) provided in the auxiliary power transmission apparatus 1, and the gas V that flows through the second evaporator 57 is cooled, by a cooling device such as a cooler 54, to a required temperature based on the purpose of use.

The gas compressor 50 (rotating machine 11) described thus far can also be operated by the motor 53 alone. The expander 3 according to the present embodiment is additionally attached to the gas compressor 50, and assists the gas compressor 50 with driving.

Meanwhile, the thermal engine 4 itself according to the seventh embodiment differs from that in the first embodiment according to the following points.

In other words, the thermal engine 4 includes the first evaporator 56 and the second evaporator 57, which are disposed in parallel. That is, two or more of the evaporators 13 are provided on the downstream side of the medium circulation pump 14.

Parallel pipes that branch from the circulation pipe 55 connected to the downstream side of the medium circulation pump 14 are respectively connected to the input sides of the first evaporator 56 and the second evaporator 57. Pipes that extend from the output sides of the first evaporator 56 and the second evaporator 57, respectively, are connected to the circulation pipe 55 on the upstream side of the expander 3.

The first evaporator 56 uses the heat of the high-pressure gas V produced by the first-stage compression means (that is, carries out thermal exchange) in order to evaporate the liquid working fluid T, thus producing a vaporous working fluid T. Meanwhile, like the first evaporator 56, the second evaporator uses the heat of the high-pressure gas V produced by the second-stage compression means 52 (that is, carries out thermal exchange) in order to evaporate the liquid working fluid T, thus producing a vaporous working fluid T. The vaporous working fluid T produced in this manner is sent to the expander 3 through the circulation pipe 55 that is connected to the output sides of the first evaporator 56 and the second evaporator 57.

The expander 3 expands the vaporous working fluid T produced by the first evaporator 56 and the second evaporator 57, and the driving unit 2 rotationally drives using the pressure difference in the pre- and post-expansion working fluid T.

The rotational driving force produced by the expander 3 is extracted to the exterior of the thermal engine 4 via the magnetic coupling 10, and is transferred to the speed variator 17 (reducer). The speed variator 17 changes the rotational driving force to a rotational speed that is optimal for driving the gas compressor 50, and the post-change rotational driving force is then transmitted to the motor 53 of the gas compressor 50 via the clutch mechanism 18.

Through this configuration, the heat of the high-pressure gas V produced by the gas compressor 50 can be reused rather than discarded, and the rotational driving force produced by the driving unit 2 of the expander 3 can be used as auxiliary power for the motor 53 provided in the gas compressor 50, which makes it possible to realize an energy-efficient gas compressor 50.

Note that the behavior of the working fluid T following the expansion performed by the expander 3 is essentially the same as described in the first embodiment, and thus descriptions will be omitted here.

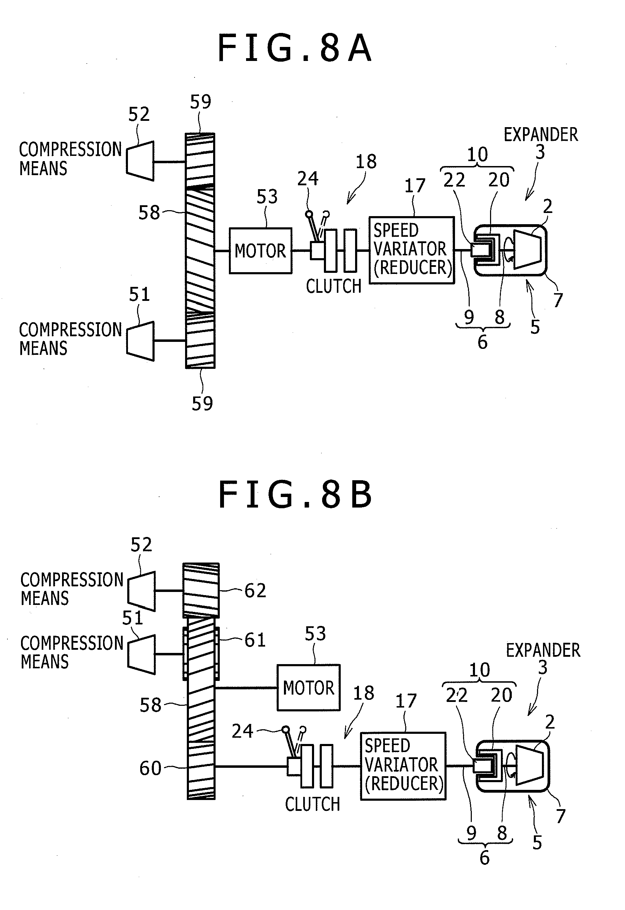

Although the descriptions of the seventh embodiment describe the compression means 51 and 52 of the gas compressor 50 as being in an axially serially connected state, another state (non-axially serially connected) can be employed as a specific connection method, as shown in Fig. 8.

For example, as shown in Fig. 8A, a configuration may be employed in which the speed variator 17 and the clutch mechanism 18 are connected to the output shaft of the expander 3 of the auxiliary power generation apparatus and the motor 53 of the gas compressor 50 is connected to the output shaft of the clutch mechanism 18. A bull gear 58 is connected to the drive shaft of the motor 53. Two pinion gears 59 interlock with the bull gear 58, and the rotational driving force of the bull gear 58 is transmitted to the respective pinion gears 59. The two pinion gears 59 are disposed on either side of the bull gear 58, and are connected to the drive shafts of the first-stage compression means 51 and the second-stage compression means 52, respectively.

Through this, the rotational driving force produced by the expander 3 is transmitted to the bull gear along with the rotational driving force of the motor 53, and is then transmitted to the first-stage compression means 51 and the second-stage compression means 52 through the pinion gears 59 that interlock with the bull gear 58.

Meanwhile, as shown in Fig. 8B, a configuration in which a pinion gear (a first pinion gear 60) is connected to the output shaft of the expander 3 of the auxiliary power generation apparatus, and the first pinion gear 60 interlocks with the bull gear 58, can also be employed. The bull gear 58 is connected to the drive shaft of the motor 53.

Another pinion gear (a second pinion gear 61) interlocks with the bull gear 58 attached to the drive shaft of the motor 53, and the second pinion gear 61 is connected to the drive shaft of the first-stage compression means 51. Furthermore, yet another pinion gear (a third pinion gear 62) interlocks with the bull gear 58, and the third pinion gear 62 is connected to the drive shaft of the second-stage compression means 52.

Through this, the rotational driving force produced by the expander 3 can be transmitted to the bull gear 58 to which the driving force from the motor 53 is transmitted, and can then be transmitted to the pinion gears 59 that interlock via the bull gear 58; the rotational driving force is then transmitted to the first-stage compression means 51 and the second-stage compression means 52.

Note that the descriptions disclosed in the above embodiment are to be understood as being in all ways exemplary and in no way limiting. The scope of the present invention is defined not by the aforementioned descriptions but by the scope of the appended claims, and all changes that fall within the same essential spirit as the scope of the claims are intended to be included therein as well. For example, although not particularly mentioned in the aforementioned embodiments, a speed variator need not be provided in the power transmission path spanning from the expander to the rotating machine in the case where the rotational speed of a mechanical expander is inputted directly into the rotating machine. In addition, the numbers of driving-side magnets and slave-side magnets in the magnetic coupling are not limited to two, and more than two magnets may be provided for each. Furthermore, items that are not explicitly disclosed in the embodiments disclosed above, such as operating conditions, working conditions, various types of parameters, the dimensions, weights, volumes, and the like of constituent elements use values that can easily be assumed by one skilled in the art without departing from the scope that one skilled in the art normally works within.

## Claims

1. A power generation apparatus comprising:
an expander;
a housing that houses the expander, the housing containing a driving unit of the expander within a space enclosed by a partition wall of the housing;
a power transmission shaft that extracts rotational driving force generated by the expander to the exterior of the housing, the power transmission shaft including a magnetic coupling, for transmitting the rotational driving force from the expander to the exterior of the housing, that is divided between the interior and exterior of the housing of the expander through the partition wall;
a driving source provided separately from the expander, the rotational driving force extracted by the power transmission shaft being used as auxiliary power for supplementing the power of the driving source when driving a rotating machine using the power of the driving source;
a clutch mechanism, provided in the power transmission path that transmits the rotational driving force extracted by the power transmission shaft to the driving source, that controls a transmission state of the rotational driving force; and
a speed variator, provided in the power transmission path, that changes and transmits a rotational speed of the power transmission shaft.

2. The power generation apparatus according to claim 1, wherein an electricity generator that generates electricity using the rotational driving force is provided in the power transmission path.

3. The power generation apparatus according to claim 1, wherein an electricity generator that generates electricity using the rotational driving force extracted via the driving unit of the expander and transmits power generated by the expander to the power transmission shaft is provided within the housing.

4. A power generation apparatus that drives a compressor that compresses a gas to a high pressure, the apparatus comprising:
a thermal engine, the thermal engine including an evaporator that evaporates a liquid working medium using heat supplied from a heat source, an expander that produces rotational driving force by expanding the working fluid evaporated by the evaporator, a condenser that converts the working fluid expanded by the expander into a liquid working medium by condensing the working fluid, and a medium circulation pump that pressure-transfers the liquid working medium to the evaporator;
a housing that houses the expander, the housing containing a driving unit of the expander within a space enclosed by a partition wall of the housing;
a power transmission shaft that extracts rotational driving force generated by the expander to the exterior of the housing, the power transmission shaft including a magnetic coupling, for transmitting the rotational driving force from the expander to the exterior of the housing, that is divided between the interior and exterior of the housing of the expander through the partition wall; and
a driving source provided separately from the expander, the rotational driving force extracted by the power transmission shaft being used as auxiliary power for supplementing the power of the driving source when driving the compressor using the power of the driving source,
wherein heat of the gas that has been adiabatically compressed by the compressor is supplied to the evaporator as the heat source for evaporating the liquid working medium.

5. The power generation apparatus according to claim 4,
wherein the power generation apparatus drives a multi-stage compressor that includes two or more compressors; and
the high-pressure gas discharged from each compressor in the multi-stage compressor is supplied to the evaporator as the heat source for evaporating the working medium within the thermal engine.
